# EUROPEAN PATENT SPECIFICATION

(11) **EP 3 082 012 B1**
(45) Date of publication and mention of the grant of the patent: **05.05.2021**
(21) Application number: 16158787.8
(22) Date of filing: 04.03.2016
(51) Int. Cl.: G05G 1/12, H01H 19/14

(54) **SWITCH**
SCHALTER
INTERRUPTEUR

(30) Priority: 23.03.2015 ES 201530379
(43) Date of publication of application: 19.10.2016
(73) Proprietor: Fontini, S.A., 08130 Santa Perpetua de Mogoda (Barcelona) (ES)
(72) Inventor: FONT GASULLA, Roger, 08130 STA.PERPÈTUA DE MOGODA (BARCELONA) (ES); VILARDELL ESTELA, Roger, 08024 BARCELONA (BARCELONA) (ES)
(74) Representative: Durán-Corretjer, S.L.P.

(56) References cited:
- WO-A1-2006/067764
- WO-A1-2013/178332
- DD-A1- 218 217
- GB-A- 2 040 396
- US-A1- 2007 095 637

## Description

The present invention relates to electrical components and refers in particular to a switch having a cam or a key-type switch. The switch of the present invention is provided with a manual actuation element consisting of a key-type crosspiece, imitating the switches formerly used, made from porcelain-type materials and the like. More specifically, the present invention relates to the system for fixing said key to the switch.

Key-type switches known in the prior art comprise a contact carrier case, from which there protrudes a stem to which a manual actuator key is fixed. The stem is fixed to the key with the aid of an external element, generally a screw. For example, Spanish Utility Model document ES1048068U discloses a switch having a cam, comprising a contact carrier case from which there protrudes a threaded stem with a smaller-diameter end having a longitudinal cut for subjecting the key to pressure. In this invention a screw is required, with an action perpendicular to the stem to fix the key to the stem.

Another example of joining the actuator key of a known cam-type switch is disclosed in Spanish patent application document ES2189621A1. In this case the stem protruding from the contact carrier case is joined to the key by means of a screw that acts in the same direction as that of the stem. US-A-2007/095637 discloses a switch according to the preamble of claim 1.

The need for a screw involves some drawbacks, including the complexity, awkwardness and slowness of fitting and dismantling the key, in addition to an unattractive appearance, since the head of the screw remains visible.

The present document intends to disclose a switch that resolves the above-mentioned drawbacks of the known switches. In particular, the present document discloses a switch of the type comprising an outer protective cover having a central orifice, a switch actuator key, a case for carrying contacts and mechanisms of the switch, said case comprising a stem protruding upwards, characterised in that said key comprises a hollow portion for accommodating the stem inside it, said hollow portion comprising at least one flexible rib, and in that said case for carrying contacts and mechanisms of the switch comprises a neck into which the rib of said hollow portion fits, said neck comprising an inlet diameter smaller than the greatest diameter of the rib so that the rib is resiliently deformed for insertion into the neck.

The actuator key is joined to the contact carrier case in a simple manner, without the need for any ancillary element such as a screw. The ribs deform as they are inserted into the neck of the contact carrier case until they are located fully inside said neck. The geometry of the ribs, together with the geometry of the neck, ensures that the ribs fit together with and provide fixing for the key.

Preferably, said hollow portion comprises an end for insertion into the neck of the case for carrying contacts and mechanisms, the rib being positioned at said end for insertion into the neck.

Optionally, said rib comprises on the outside a sloping, wedge-shaped portion to facilitate insertion of the key into the neck. The thickness of the ribs in the sloping portion is reduced, making it easier for their ends to be deformed.

In one embodiment of the invention, the hollow portion of the switch actuator key comprises four flexible ribs.

Preferably, said stem has two areas of reduced diameter, giving rise to two edges that form a stop against the inward movement of the ribs into the neck. It is thus easy to insert the ribs into the neck until they are stopped by the stops.

Optionally, said neck comprises an internal diameter greater than the inlet diameter of the key, giving rise to an upper edge that forms a stop against the outward movement of the ribs from the neck. The ribs of the key are inserted through the entry of the neck, which is smaller in diameter than the inner cavity of the neck, within which the ribs are positioned once they are fully inserted into the neck.

The extraction resistance of the key is of such a level as to allow it to be extracted when pulled upon with considerable force, i.e. with a force that is not normally exerted on said key during ordinary use of the switch.

Optionally also, said stem and said hollow portion of the key are cylindrical.

For a better understanding thereof, an embodiment is described below based on drawings that explain but do not limit the present invention:
Fig. 1 is a perspective view of an embodiment of the switch according to the present invention with the actuator key separate.
Fig. 2 shows the perspective view of Fig. 1 in partial section.
Fig. 3 is a view in cross section of the switch in Fig. 1.
Fig. 4 is a view in cross section of the switch in Fig. 1 with the key partly inserted onto the stem.
Fig. 5 is a view in cross section of the switch in Fig. 1 with the key fixed on the stem.
Fig. 6 is a cross-sectional view of a detail of the join between the ribs of the key and the neck of the carrier case shown in Fig. 5.

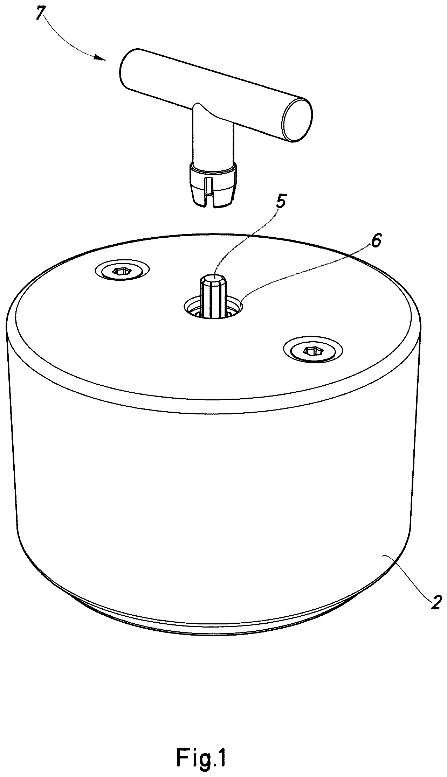

Fig. 1 shows an embodiment of the switch to which the present invention relates, comprising an outer protective cover -2- having a central orifice -6- through which a stem -5- protrudes. The key -7- for actuating the switch is separate from the switch.

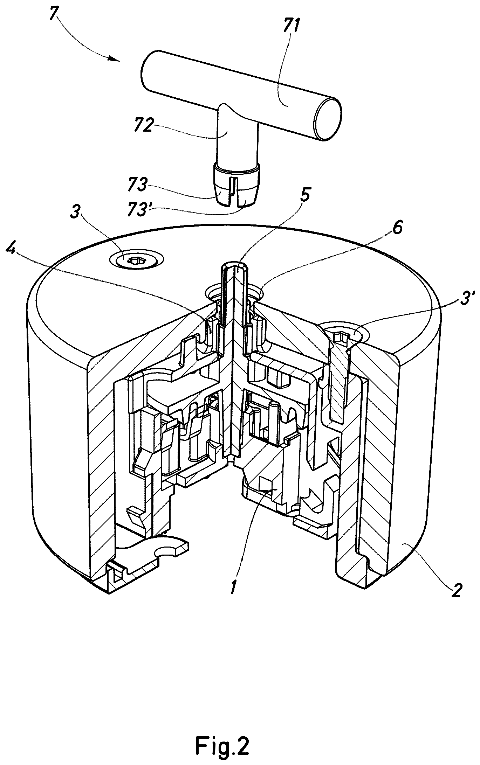

Fig. 2 shows the contact carrier case -1-, which is joined to the outer protective cover -2- by means of screws -3-, -3'-. The upper portion of the carrier case -1- has a cylindrical neck -4- through which the stem -5- protrudes, said stem also protruding above the protective cover -2-through a central orifice -6-.

The key -7- is used by a user for actuating the stem -5-, which is connected to the control mechanisms of the switch. The key -7- is T-shaped with a solid horizontal and cylindrical portion -71- for actuation by the user and a vertical and cylindrical portion -72- that accommodates the stem -5- when the key -7- is inserted through the neck -4- of the carrier case -1-. The key -7- has four flexible ribs at its end by which it is inserted into the neck, only two of which ribs are indicated in Fig. 2, with the reference numerals -73- and -73'-.

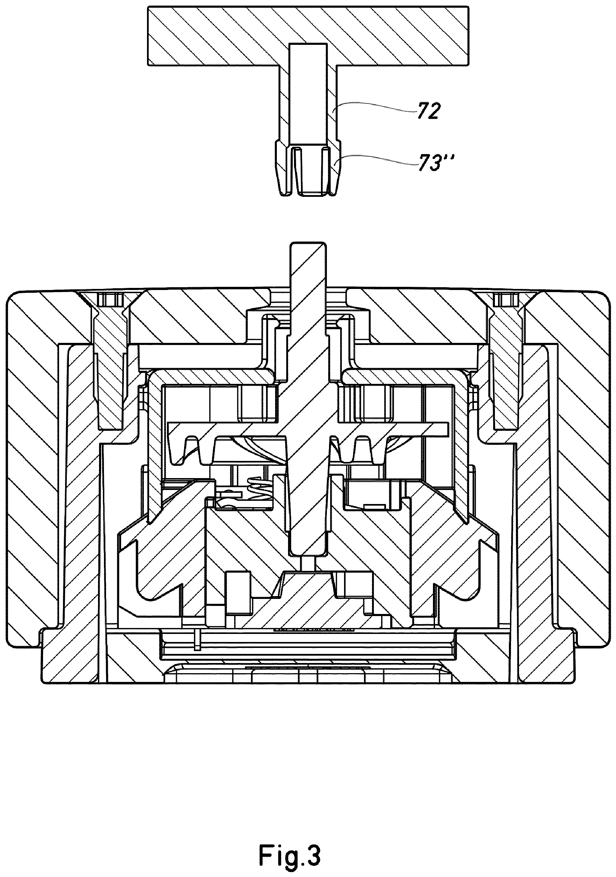

The vertical and cylindrical portion -72- is hollow, as seen in Fig. 3, which shows a rib -73"- that was hidden in Fig. 2.

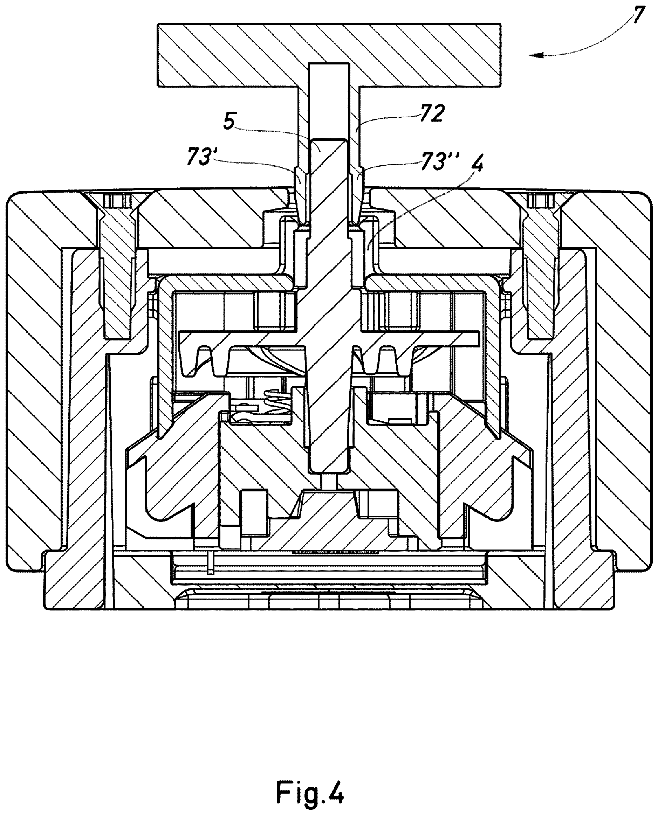

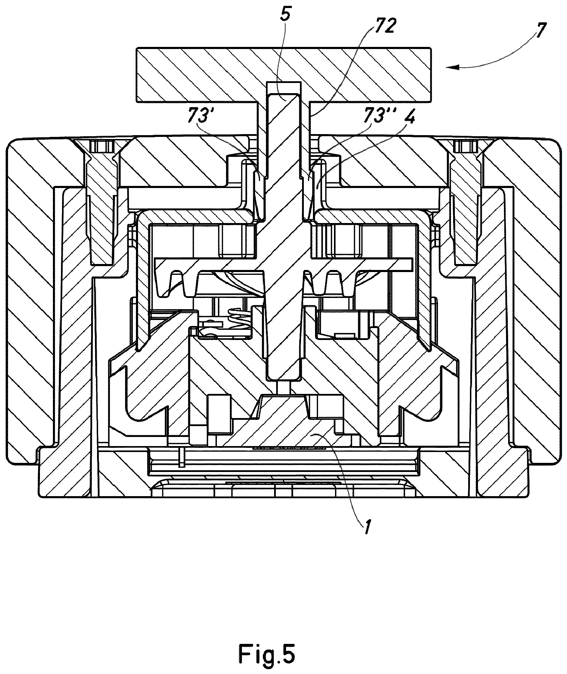

Fig. 4 shows the key -7- partly inserted onto the stem -5-, at which moment the stem fits together with the hollow vertical portion -72- of the key -7-. When the ribs -73'-, -73"- are out of the neck -4- there is a gap between the stem -5- and the ribs -73'-, -73"-. The ribs -73'-, -73"- fit against the stem -5- when they are fully inside the neck -4-, where the diameter of the stem -5- is greater, as shown in Fig. 5.

Once the key -7- has been fully inserted into the neck -4-, as shown in Fig. 5, the ribs -73'-, -73"- fit together with the geometry of the stem -5- and the neck -4-. Said geometry allows the key -7- to be fixed inside the carrier case -1- by the stop formed by the hollow portion -72- of the key with both the neck -4- and the stem -5-, which prevents the key -7- from moving vertically.

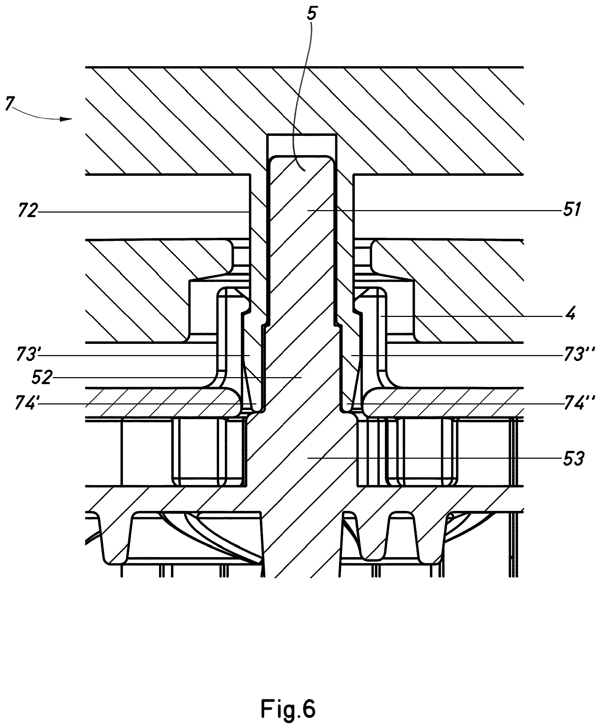

As seen in Fig. 6, the neck -4- has an inlet diameter smaller than the diameter of the ribs -73'-, -73"-. When the ribs -73', -73"- are inserted into the neck -4-, they deform and allow the key -7- to be inserted into the neck despite the difference in diameters. Once the ribs -73', -73"- have been fully inserted into the neck -4-, they return to their original shape, the key -7- being fixed in the carrier case -1-.

The ribs -73'-, -73"- have a sloping portion at their ends -74'-, -74"- giving them a wedge shape to facilitate insertion of the key -7- into the neck -4-.

The detail of Fig. 6 shows that the stem -5- has three different diameters. The smaller diameter -51- fits together with the hollow portion -72- of the key, the medium diameter -52- fits with the ribs -73'-, -73"- and the larger diameter -53- is located below the key -7- and the ends -74'-, -74"- of the ribs -73'-, -73"- form a stop therein. The changes in diameter give rise to edges where the hollow portion -72- of the key is stopped in its insertion movement into the neck -4-. On the other hand, in the movement for extraction from the neck, the ribs -73'-, -73"- form a stop with the neck -4- in the area of smaller diameter thereof in its inlet or outlet orifice.

Although the invention has been described in relation to a preferred embodiment, this should not be considered to limit the invention, which is to be defined by the following claims.

## Claims

1. Switch comprising an outer protective cover (2) having a central orifice (6), a switch actuator key (7), a case (1) for carrying contacts and mechanisms of the switch, the case (1) comprising a stem (5) protruding upwards, said key (7) comprising a hollow portion (72) for accommodating the stem (5) inside it, said hollow portion (72) comprising at least one flexible rib (73), **characterised in that** said case (1) for carrying contacts and mechanisms of the switch comprises a neck (4) into which the rib (73) of said hollow portion (72) fits, said neck (4) having an inlet diameter smaller than the greatest diameter of the rib (73) so that the rib (73) is resiliently deformed for insertion into the neck (4).

2. Switch according to claim 1, **characterised in that** said hollow portion (72) of the key (7) comprises an end for insertion into the neck (4) of the case (1) for carrying contacts and mechanisms, the rib (73) being positioned at said end for insertion into the neck (4).

3. Switch according to claims 1 or 2, **characterised in that** said rib (73) comprises on the outside a sloping, wedge-shaped portion (74) to facilitate insertion of the key (7) into the neck (4).

4. Switch according to any one of the preceding claims, **characterised in that** the hollow portion (72) of the switch actuator key comprises four flexible ribs (73, 73', 73", 73'").

5. Switch according to any one of the preceding claims, **characterised in that** said stem (5) has two areas of reduced diameter, giving rise to two edges that form a stop against the inward movement of the at least one rib (73) into the neck (4).

6. Switch according to any one of the preceding claims, **characterised in that** said neck (4) comprises an internal diameter greater than the inlet diameter of the key, giving rise to an upper edge that forms a stop against the outward movement of the at least one rib (73) from the neck.

7. Switch according to any one of the preceding claims, **characterised in that** said stem (5) and said hollow portion (72) of the key (7) are cylindrical.

## Patentansprüche

1. Schalter, umfassend eine äußere Schutzabdeckung (2), aufweisend eine zentrale Öffnung (6), einen Schalterbetätigungsschlüssel (7), ein Gehäuse (1) zum Aufnehmen von Kontakten und Mechanismen des Schalters, wobei das Gehäuse (1) einen nach oben vorstehenden Schaft (5) umfasst, wobei der Schlüssel (7) einen hohlen Teil (72) zum Aufnehmen des Schafts (5) in ihm umfasst, wobei der hohle Teil (72) zumindest eine flexible Rippe (73) aufweist,
**dadurch gekennzeichnet, dass** das Gehäuse (1) zum Aufnehmen von Kontakten und Mechanismen des Schalters einen Hals (4) umfasst, in den die Rippe (73) des hohlen Teils (72) passt,
wobei der Hals (4) einen Einlassdurchmesser aufweist, der kleiner ist als der größte Durchmesser der Rippe (73), so dass die Rippe (73) zum Einführen in den Hals (4) elastisch verformt wird.

2. Schalter nach Anspruch 1, **dadurch gekennzeichnet, dass** der hohle Teil (72) des Schlüssels (7) ein Ende zum Einführen in den Hals (4) des Gehäuses (1) zum Aufnehmen von Kontakten und Mechanismen umfasst, wobei die Rippe (73) an diesem Ende zum Einführen in den Hals (4) angeordnet ist.

3. Schalter nach Anspruch 1 oder 2, **dadurch gekennzeichnet, dass** die Rippe (73) an der Außenseite einen schrägen, keilförmigen Teil (74) umfasst, um das Einführen des Schlüssels (7) in den Hals (4) zu erleichtern.

4. Schalter nach einem der vorangegangenen Ansprüche, **dadurch gekennzeichnet, dass** der hohle Teil (72) des Schalterbetätigungsschlüssels vier flexible Rippen (73, 73', 73", 73"') umfasst.

5. Schalter nach einem der vorangegangenen Ansprüche, **dadurch gekennzeichnet, dass** der Schaft (5) zwei Bereiche mit reduziertem Durchmesser aufweist, wodurch zwei Kanten entstehen, die einen Anschlag gegen die Einwärtsbewegung der mindestens einen Rippe (73) in den Hals (4) bilden.

6. Schalter nach einem der vorangegangenen Ansprüche, **dadurch gekennzeichnet, dass** der Hals (4) einen Innendurchmesser umfasst, der größer ist als der Einlassdurchmesser des Schlüssels, wodurch ein oberer Rand entsteht, der einen Anschlag gegen die Auswärtsbewegung der mindestens einen Rippe (73) aus dem Hals bildet.

7. Schalter nach einem der vorangegangenen Ansprüche, **dadurch gekennzeichnet, dass** der Schaft (5) und der hohle Teil (72) des Schlüssels (7) zylindrisch sind.

## Revendications

1. Interrupteur comprenant un couvercle de protection externe (2) ayant un orifice central (6), une clé d'actionnement d'interrupteur (7), un boîtier (1) pour porter les contacts et les mécanismes de l'interrupteur, ledit boîtier (1) comprenant une tige (5) faisant saillie vers le haut, ladite clé (7) comprenant une partie creuse (72) pour recevoir la tige (5) à l'intérieur de celle-ci, ladite partie creuse (72) comprenant au moins une nervure flexible (73),
**caractérisé en ce que** ledit boîtier (1) pour porter les contacts et les mécanismes de l'interrupteur comprend un col (4) dans lequel s'adapte la nervure (73) de ladite partie creuse (72),
ledit col (4) comprenant un diamètre d'entrée plus petit que le plus grand diamètre de la nervure (73) de telle sorte que la nervure (73) est déformée de manière élastique pour l'insertion dans le col (4).

2. Interrupteur selon la revendication 1, **caractérisé en ce que** ladite partie creuse (72) de la clé (7) comprend une extrémité destinée à être insérée dans le col (4) du boîtier (1) pour porter les contacts et les mécanismes, la nervure (73) étant positionnée à ladite extrémité pour être insérée dans le col (4).

3. Interrupteur selon les revendications 1 ou 2, **caractérisé en ce que** ladite nervure (73) comprend à l'extérieur une partie inclinée (74), en forme de coin, pour faciliter l'insertion de la clé (7) dans le col (4).

4. Interrupteur selon l'une quelconque des revendications précédentes, **caractérisé en ce que** la partie creuse (72) de la clé d'actionnement de l'interrupteur comprend quatre nervures flexibles (73, 73', 73", 73"').

5. Interrupteur selon l'une quelconque des revendications précédentes, **caractérisé en ce que** ladite tige (5) présente deux zones de diamètre réduit, donnant lieu à deux bords qui forment une butée s'opposant au mouvement de pénétration de ladite au moins une nervure (73) dans le col (4).

6. Interrupteur selon l'une quelconque des revendications précédentes, **caractérisé en ce que** ledit col (4) comprend un diamètre interne supérieur au diamètre d'entrée de la clé, donnant lieu à un bord supérieur qui forme une butée s'opposant au mouvement de ladite au moins une nervure (73) vers l'extérieur à partir du col.

7. Interrupteur selon l'une quelconque des revendications précédentes, **caractérisé en ce que** ladite tige (5) et ladite partie creuse (72) de la clé (7) sont cylindriques.
